(19)

Europäisches
Patentamt
European
Patent Office
Office européen
des brevets

(11) **EP 2 107 361 A1**

(12) **EUROPEAN PATENT APPLICATION**

(43) Date of publication:
**07.10.2009 Bulletin 2009/41**

(51) Int Cl.:
*G01N 21/17* (2006.01)       *G01N 21/25* (2006.01)

(21) Application number: **08153946.2**

(22) Date of filing: **02.04.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Unilever PLC**
**London**
**EC4Y 0DY (GB)**

(72) Inventors:
• **Asquith, Michael Harry**
  **Bedford, Bedfordshire MK44 1LQ (GB)**
• **Griffiths, Allen**
  **Bedford, Bedfordshire MK44 1LQ (GB)**

(74) Representative: **Hugot, Alain**
**Unilever Patent Group**
**Colworth House**
**Sharnbrook**
**Bedford, MK44 1LQ (GB)**

(54) **Process and Apparatus for Analysing Plant Material**

(57)     Disclosed is a process comprising the steps of: providing a sample of plant material; illuminating the sample with light consisting of two additive primary colours; and recording at least one colour parameter from the illuminated sample. Also disclosed in an apparatus for carrying out the process.

Fig. 2

EP 2 107 361 A1

**Description**

**TECHNICAL FIELD OF THE INVENTION**

The present invention relates to a process and apparatus for analysing plant material, especially tea plant material. In particular the present invention relates to the determination of quality parameters using colour data obtained by illuminating the plant material with light consisting of two primary colours.

**BACKGROUND TO THE INVENTION**

Plants are used in a variety of industries including the food industry. A necessary step in processing plant material for food is harvesting the plant material. Invariably, harvesting involves damaging the plant material. The plant material may also be damaged during transit or storage. In addition many traditional foods are made by deliberately wounding plant material during processing in order, for example, to aid flavour and/or colour generation.

In the manufacture of leaf tea the quality of the final product often depends on carefully controlling the wounding process. Thus, if leaf is damaged during harvest, transport or storage, the quality of the final made tea can be compromised. In fact, tea leaf picked on a plantation may arrive at a processing factory in variable condition. The variability can arise due to a myriad of factors e.g. growth conditions, environmental, plucking regime, transport, storage etc. Currently, several approaches are used to assess leaf quality, ranging from basic visual assessment to counting the number of broken or damaged leaf pieces. However, developing a quantifiable method to measure leaf quality / damage has not been straightforward. Methods of assessment have included conductivity and carbon dioxide monitoring. However, each method has drawbacks.

Thus, we have recognised that a simple method is required to assess the quality of a plant material. In particular there is a need for a process and apparatus suitable for monitoring the quality of leaf tea which is rapid, non-destructive and yields a simple numerical index of quality. We have found that such a need may be met by providing a technique for detecting changes in the colour of plant material.

Previous efforts have been made to asses the quality of tea using colour measurement.

JP 10/056,966 A (KAWASAKI KIKO KK) discloses an inspection apparatus for color of tea leaves that has a light shielding chamber for performing a visual inspection and a standard light source lamp provided so as to face to inside of the light shielding chamber, and further, a light shielding chamber for performing a scientific inspection, an image inputting device such as a CCD camera taking a photograph of the image of sample tea leaves and an image treating device transforming image information of the image inputting device to a prescribed type of value.

JP 2001/327,249 A (KAGOSHIMA PREFECTURE) discloses a method for evaluating tea leaves characterized by realizing mechanization and improvement of a grading through combinedly using grading based on data of tea leaves ingredients and tea leaves appearance data respectively.

These existing methods use white light for illuminating the tea. In principle, it is possible to derive a numerical index of colour change using white light and one of the established colour measurement systems, e.g. Cielab L*a*b*. We have found, however, that in practice such an approach is problematical. The key parameters of hue, saturation and lightness, regardless of how they are interpreted, are interdependent, i.e., changes in one parameter almost always affect the others. Thus parameters measured using existing techniques are heavily dependent on the characteristics of the camera, and on the colour temperature of the light, which itself is sensitive to small changes in filament current, and to the age and state of the filament. In addition, the relationship between L*a*b* units and the RGB values used by digital optical devices is non-linear.

We have now developed a process and apparatus which utilises two-colour light. Under these conditions, saturation is fixed at 100% and is therefore no longer a variable. As a result the measured parameters are more robust in terms of their reproducibility and/or in terms of the ease with which they can be related to a quality parameter of plant material.

**SUMMARY OF THE INVENTION**

Thus in a first aspect, the present invention provides a process comprising the steps of:

    a) providing a sample of plant material;
    b) illuminating the sample with light consisting of two additive primary colours; and
    c) recording at least one colour parameter from the illuminated sample.

In a further aspect the present invention provides an apparatus comprising:

(i) a sample of plant material;

(ii) an illumination device arranged to illuminate the sample at a measuring station with light consisting of two additive primary colours; and

(iii)a recording device for recording at least one colour parameter from the illuminated sample.

This apparatus is particularly suitable for carrying out the process of the first aspect.

Illumination of the sample of plant material may be accomplished in any suitable way so long as the light reaching the sample is deficient in only one of the additive primary colours (red, green or blue). For example, the sample may be illuminated in step (b) using a first light source for generating light of a first additive primary colour and a second light source for generating light of a second additive primary colour.

A particularly convenient method of generating the two coloured light, however, involves selectively removing the unwanted (third) primary colour from white light. In this way, for example, only a single light source is required. Thus in one embodiment the sample is illuminated in step (b) by passing white light through a filter which blocks the third additive primary colour. Similarly, the illumination device of the apparatus may comprise a white light source and a filter arranged to block the third additive primary colour from the white light before the light reaches the sample.

The choice of the two primary colours used to illuminate the sample is determined, to a large extent, by the natural colour of the plant material and the expected variation in appearance of the plant material according to a predetermined quality. However, many quality changes in plant material involve a change from green/yellow colours to more red/brown colours. Thus it is preferred that the two additive primary colours which illuminate the sample are red and green (and thus the third primary colour which is absent from the illuminating light is blue).

We have also found that the use of polarised light is advantageous as this may improve the robustness of the measured parameters. In particular it is found that use of polarised light can reduce or eliminate extraneous colour data originating from reflected light. Thus it is preferred that the illuminating light is polarised, for example by passing the illuminating light through a first polarizing filter before the light reaches the sample. It is particularly preferred that light is passed through a second polarizing filter with a polarization axis at 90° to that of the first polarization filter before the colour parameter is recorded. Thus the illumination device may comprise a first polarising filter and the recording device may comprise a second polarising filter having its polarization axis at 90° to that of the first polarization filter.

The process and apparatus of this invention may be used to analyse a whole range of plant materials. For example, the plant material may comprise fruit, leaf, stem, flower, root, tuber and/or nut material. We have found that the present invention is particularly suitable for the analysis of tea plant material, especially tea leaves. "Tea" for the purposes of the present invention means material from *Camellia sinensis* var. *sinensis* and/or *Camellia sinensis* var. *assamica.*

The plant material may be analysed in batches or may be fed in a continuous manner through the measuring station. In a particularly preferred arrangement the plant material is transported from a store of the material to the measuring station by a conveyor, such as a belt conveyor.

The choice of the colour parameter or parameters which is recorded is determined, to a large extent, by the natural colour of the plant material and the expected variation in appearance of the plant material according to a predetermined quality. Examples of colour parameter include Hue, Lightness and Intensity (also known as Saturation). Colour parameters and colour models are described in detail, for example, in Chapter 4.6 (Colour Image Processing) of "Digital Image Processing" by R.C.Gonzalez and R.E.Woods (Addison-Wesley Publishing Co., Reading, Massachusetts, 1992, pp.221-249). A particularly useful colour parameter is Hue as changes in Hue are often characteristic of changes in the quality of plant material.

Conveniently, step (c) of the process comprises capturing a digital image of the illuminated plant material and calculating the colour parameter from the image. The image may be captured, for example by a digital camera, CCD camera or similar device. The colour parameter can then conveniently be recorded in a register of a data processor.

The colour parameter is typically used to determine a quality parameter of the plant material. The quality parameter may be, for example, the degree of damage to the plant material, the degree of ripeness of the plant material or other such quality as may be desired to quantify.

In a particularly preferred embodiment, the colour parameter is analysed by a data processing station and converted to a value related to the quality parameter. The data processor is conveniently programmed with an algorithm for converting the colour parameter to the value related to a quality parameter of the plant material. Typically the value related to the quality parameter will have been previously correlated with the quality parameter.

An example of a value related to a quality parameter is the frequency of a given Hue. We have found, for example, that the frequency of Hue of 60° or less (using the convention wherein red = 0°) correlates well with the degree of damage inflicted on plant material which is green in its fresh (undamaged) state.

Once the value related to the quality parameter has been determined, it may be used to determine how the sample of plant material is to be further processed. For example, the plant material may be sorted into different batches depending on the measured value. A particularly convenient, and therefore preferred, arrangement is where the data processor controls a sortation device arranged to sort the plant material according to the value related to the quality parameter.

**BRIEF DESCRIPTION OF THE DRAWINGS**

Figure 1 is a schematic representation of an apparatus according to an embodiment of the invention.

Figure 2 is a representation of part of the apparatus shown in Figure 1, including a detailed schematic view of the measuring station (10) thereof.

**DETAILED DESCRIPTION**

The present invention will be further described with reference to the following preferred embodiments and examples.

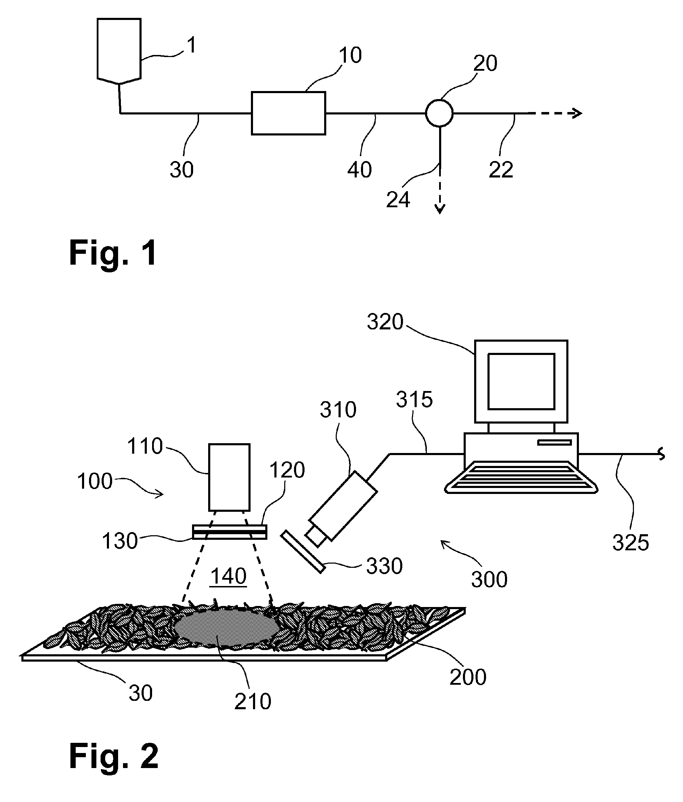

An embodiment of the invention is illustrated schematically in Figure 1. In this embodiment, a store of plant material (1) is disposed to deliver a sample of the plant material to a first conveyor section (30). The store may be, for example, a hopper, vat or even a crate or other such transportable receptacle.

The first conveyor section (30) extends from the store (1) to a measuring station (10) which is described in more detail below.

Downstream from the measuring station (10) is a sortation device (20) and extending there-between is a second conveyor section (40). The sortation device (20) is arranged such that it may selectively direct material arriving on the second conveyor section (40) to either a process stream (22) or a waste stream (24). The sortation device (20) may, for example, comprise one or more gates which may be reversibly configured to control the path of material on the second conveyer section (40).

The apparatus at the measuring station (10) is shown in detail in Figure 2. Plant material (200), for example freshly harvested tea leaves, is shown spread on the upper surface of a part of the first conveyor section (30) at the measuring station (10). A sample of the plant material (210) is illuminated from above by light consisting of two primary colours (140) from an illumination device (100). A recording device (300) is arranged to image the illuminated sample (140) and record at least one colour parameter of the image.

The illumination device (100) comprises a white light source, such as a lamp (110) which directs light onto the sample (210). Between the lamp (110) and the sample (210), are two filters (120, 130) through which the light must pass before reaching the sample (210). The first filter is a colour filter (120) and prevents transmission of the third primary colour therethrough. The second filter (130) is a polarising filter.

The recording device (300) comprises a digital camera (310), a third filter (330) and a data processing station (320) operably connected to the digital camera (310) via a first signal conduit (315).

The third filter (330) is a polarising filter similar to the second filter (130) and the two polarising filters (130, 330) are arranged to be cross-polarised, i.e. arranged such that their polarisation axes are mutually perpendicular. Any light reaching the digital camera (310) from the illuminated sample (210) must pass through the third filter (330) which thereby removes any light which is simply reflected from the surface of the illuminated sample (210) and which is devoid of meaningful colour data.

The digital camera (310) communicates with the data processing station (320) via the first signal conduit (315) which may be, for example, an electrical cable such as a USB cable or the like. Alternatively, the digital camera (310) may communicate with the data processing station (320) via a wireless connection. It is also possible that the data processing station (320) is integral with the digital camera (310) and that the first signal conduit is part of an integrated circuit within the digital camera (310). Alternatively the data processing station (320) may be a personal computer (PC) or a network comprising a plurality of PCs.

The data processing station (320) is operably connected to the sortation device (20) via a second signal conduit (325). The second signal conduit (325) may be, for example, an electrical cable. Alternatively, the data processing station (320) may communicate with the sortation device (20) via a wireless connection.

In use, plant material (200) is fed to the first conveyor section (30) from the store (1) and is carried by the first conveyor section (30) to the measuring station (10).

At the measuring station (10), the illumination device (100) continuously emits polarised two-colour light (140) onto a fixed portion of the upper surface of the first conveyer section (30).

At predetermined time intervals, the digital camera (310) is activated and captures an image of the illuminated sample of plant material (210). The resulting image is then transmitted to the data processing station (320) via the first signal conduit (315) and stored in a register.

A data processor within the data processing station (320) analyses the image according to a pre-programmed algorithm. The algorithm calculates colour parameters from the image, such as the Hue of each pixel of the image and records a predetermined value such as the frequency of a given Hue in the image. The algorithm then compares the recorded value with a threshold value predetermined from calibration of the colour parameter with a quality parameter (for example degree of damage). In the event that the recorded value is not within the threshold, for example if the frequency of a given Hue is higher than the threshold value, then the algorithm causes the data processing station (320) to transmit a signal, via the second signal conduit (325), to the sortation device (20). In the event that a subsequent recorded value is within the threshold, then the algorithm causes the data processing station (320) to cease transmission of the signal to the sortation device (20).

After passing through the measuring station (10) the plant material (200) is fed, via the second conveyor section (40), to the sortation device (20).

The configuration of the sortation device (20) is dependent on the presence of the signal from the data processing station (320). When a signal is present, the sortation device (20) is configured to direct the plant material (200) to the waste stream (24). When the signal is absent the sortation device (20) is configured to direct the plant material (200) to the process stream (22) where it is processed, for example, into a finished food product for commercial sale.

In order to avoid waste of plant material which is of good quality, it is preferable that the data processing station (320) is programmed such that the signal transmitted to the sortation device (20) as a result of a value recorded from an image of a given sample of plant material (210) at the measuring station (10), is timed such that the signal reaches the sortation device (20) not before the time that the given sample begins to arrive at the sortation device (20). Preferably the signal reaches the sortation device (20) simultaneously with the sample.

**EXAMPLES**

The present invention will be further described with reference to the following examples.

Example 1

This Example demonstrates application of the method and apparatus of the invention to determining the degree of damage to tea leaves.

*Sample Preparation*

Fresh Kenyan tea leaves (two leaves and a bud - 300 g) were harvested. The fresh leaves were then subjected to the following processing steps:

I) First indoor wither.
II) First tumble.
III) Second indoor wither.
IV) Second tumble.
V) Third indoor wither.
VI) Third tumble.

Each wither step (I, III and V) was conducted for 1 hour at an ambient air temperature of 20°C. Each tumble step (II, IV and VI) was performed using a 39.3 cm diameter drum operating at 80 rpm for 2 minutes.

*Colour Analysis*

The entire batch of leaves was imaged fresh and after each of steps I-VI. For imaging, the batch was separated into 4 or 5 sub-samples, each sub-sample being spread roughly on a piece of black card, in a flattish pile, ca. 20 cm diameter.

The imaging system had a similar configuration to that shown in Figure 2. Briefly, white light from a Prior™ 150 W fibre optic lamp (nominal output colour temperature of 3500°K) was shone through a colour filter (Kodak™ Wratten 12 filter supplied by Edmund Optics, York) and a polarising filter (TECH SPEC™ linear polarising film supplied by Edmund Optics) onto each sub-sample. The Wratten 12 filter has effectively 0% transmission at visible wavelengths below 500 nm and close to 100% transmission at visible wavelengths above 530 nm. Thus each sub-sample was illuminated with polarised light consisting of red and green light only.

An image of each illuminated subsample was captured using a CCD camera (JVC KY 30 [768 x 576 output] - Auto white disabled) fitted with a zoom lens (JVC 1:1.4/7.5-97.5 TV) and a polarising filter which was crossed with the polarising filter of the illuminating light. The field width of each image was ca. 12 cm. No attempt was made to arrange the leaves. All imaging was carried out in a darkened room.

A personal computer was used to record and analyse each image. Capture was with Matrox Meteor™ II framegrabber and the operating software was Kontron™ KS 300. Image analysis was performed using a purpose-written macro in the Kontron™ software. The macro converts the RGB colour values for each pixel into Hue using Equation 4.6-18 of "Digital Image Processing" by R.C.Gonzalez and R.E.Woods (Addison-Wesley Publishing Co., Reading, Massachusetts, 1992, p.221-233). For light consisting only of red and green components, this equation is simplified to:

$$\text{Hue} = \text{acos} \left\{ \frac{(2R-G)/2}{\sqrt{[(R-G)^2 + RG]}} \right\}$$

The hue composition of each image was scanned across the range 0° to 120° (i.e. from red to green, assuming the convention that 0° = red) in 1° increments. The number of pixels falling within each 1° incremental band were then expressed as a percentage of the total for the entire field (referred to herein as a frequency).

The images from the 4 or 5 sub-samples from each process step were analysed batch-wise, and the results, derived as above, were aggregated using a spreadsheet.

*Results*

The results from the image analysis after each process step are shown in Table 1.

TABLE 1

| Treatment | Cumulative Frequency of Hue ≤ 60° (% of total pixels) |
|---|---|
| None (Fresh Leaves) | 2.5 |
| Step I | 2.4 |
| Steps I and II | 1.8 |
| Steps I-III | 4.6 |
| Steps I-IV | 8.1 |
| Steps I-V | 9.5 |
| Steps I-VI | 16.1 |

The data in Table 1 demonstrate that the quality of the leaf deteriorates progressively, after each tumbling and withering, and this results in an increase in the percentage of pixels falling within the orange part of the spectrum.

Example 2

The imaging and analysis techniques described in Example 1 were applied to broccoli which had been processed either by steaming or freeze-thawing. The results are shown in Table 2.

TABLE 2

| Treatment | Cumulative Frequency of Hue ≤ 60° (% of total pixels) |
|---|---|
| Steaming | 99.96 |
| Blast-freezing | 17.30 |

The results in Table 2 demonstrate that the steamed broccoli has undergone much more severe browning than the frozen broccoli.

**Claims**

1. A process comprising the steps of:

   a) providing a sample of plant material;
   b) illuminating the sample; and
   c) recording at least one colour parameter from the illuminated sample;

   **characterised in that** the sample is illuminated in step (b) with light consisting of two additive primary colours.

2. A process according to claim 1 wherein the sample is illuminated in step (b) by passing white light through a filter which blocks the third additive primary colour.

3. A process according to claim 1 or claim 2 wherein the two additive primary colours which illuminate the sample are red and green.

4. A process according to any one of the preceding claims wherein the plant material is tea leaves.

5. A process according to any one of the preceding claims wherein the colour parameter is Hue.

6. A process according to any one of the preceding claims wherein step (c) comprises capturing a digital image of the illuminated plant material and calculating the colour parameter from the image.

7. A process according to any one of the preceding claims wherein the colour parameter is used to determine a quality parameter of the plant material.

8. A process according to claim 7 wherein the quality parameter is the degree of damage to the plant material.

9. A process according to claim 7 or claim 8 wherein the colour parameter is analysed by a data processing station and converted to a value related to the quality parameter.

10. A process according to claim 8 wherein the plant material is sorted according to the value related to the quality parameter.

11. A process according to claim 9 or 10 wherein the value related to the quality parameter is the frequency of a given Hue.

12. A process according to any one of the preceding claims wherein the illuminating light is polarised

13. An apparatus comprising:

    (i) a sample of plant material;
    (ii) an illumination device arranged to illuminate the sample at a measuring station; and
    (iii) a recording device for recording at least one colour parameter from the illuminated sample;

    **characterised in that** the illumination device is arranged to illuminate the sample with light consisting of two additive primary colours.

14. An apparatus according to claim 13 comprising a conveyor for carrying the sample from a store of the plant material to the measuring station.

15. An apparatus according to claim 13 or 14 wherein the illumination device comprises a white light source and a filter arranged to block the third additive primary colour from the white light before the light reaches the sample.

16. An apparatus according to claim 13 or claim 14 wherein the illumination device comprises a first light source for generating light of a first additive primary colour and a second light source for generating light of a second additive primary colour.

17. An apparatus according to any one of claims 13 to 16 wherein the recording device comprises a digital camera or a CCD camera.

18. An apparatus according to any one of claims 13 to 17 wherein the recording device comprises a data processor.

19. An apparatus according to claim 18 wherein the data processor is programmed with an algorithm for converting the colour parameter to a value related to a quality parameter of the plant material.

20. An apparatus according to claim 19 wherein the data processor controls a sortation device arranged to sort the plant material according to the value related to the quality parameter.

**Fig. 1**

**Fig. 2**

**European Patent Office**

## EUROPEAN SEARCH REPORT

Application Number

EP 08 15 3946

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y<br>A | US 3 854 586 A (PERKINS J) 17 December 1974 (1974-12-17)<br><br>* column 3, line 59 - column 4, line 14 *<br>* column 5, lines 5-10,60-62 *<br>* column 6, lines 42-56 *<br>* column 7, lines 22-35,46-52 *<br>* column 58, lines 20-24 *<br>* column 57, lines 56-60 *<br>* figure 1 *<br>* figure 3 *<br>* claim 1 *<br>----- | 1-3,5-7, 9,13-16, 18-20<br>4,12<br>10 | INV.<br>G01N21/17<br>G01N21/25 |
| A | US 4 699 273 A (SUGGI-LIVERANI FURIO [IT] ET AL) 13 October 1987 (1987-10-13)<br>* column 5, lines 1-3 *<br>* column 5, line 53 - column 6, line 3 *<br>* column 6, lines 1-12 *<br>* column 8, lines 55-59 *<br>----- | 3,9,10, 16-20 | |
| A | US 5 353 937 A (CHILDRESS JOEL P [US]) 11 October 1994 (1994-10-11)<br>* column 7, lines 10-30 *<br>* column 8, lines 45-52 *<br>* figure 4(114) *<br>* figure 3 *<br>----- | 1,13,18 | **TECHNICAL FIELDS SEARCHED (IPC)**<br><br>G01N |
| A | US 6 646 218 B1 (CAMPBELL DUNCAN [US] ET AL) 11 November 2003 (2003-11-11)<br><br>* column 1, lines 16-20 *<br>* column 3, lines 50-63 *<br>* column 8, lines 42-63 *<br>* column 6, lines 30-37 *<br>* column 10, line 61 - column 11, line 2 *<br>* figure 2 *<br>----- | 3,6,7,9, 10,14, 16-20 | |

-/--

The present search report has been drawn up for all claims

| Place of search | Date of completion of the search | Examiner |
|---|---|---|
| The Hague | 24 July 2008 | Stadlmeyer, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## European Patent Office

## EUROPEAN SEARCH REPORT

Application Number

EP 08 15 3946

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 835 206 A (TRAGESSER SCOTT [US]) 10 November 1998 (1998-11-10) | 12 | |
| A | * column 4, lines 17,18,25-37 * | 5-7,9, 10,17,18 | |
| | * column 4, lines 46-55 * * column 5, lines 9-29 * * claim 1 * ----- | | |
| Y | JP 2003 275690 A (KAWASAKI KIKO KK) 30 September 2003 (2003-09-30) | 4 | |
| A | * abstract * | 5,17,18, 20 | |
| | * figure 1 * ----- | | |

TECHNICAL FIELDS
SEARCHED      (IPC)

The present search report has been drawn up for all claims

| Place of search | Date of completion of the search | Examiner |
|---|---|---|
| The Hague | 24 July 2008 | Stadlmeyer, R |

EPO FORM 1503 03.82 (P04C01)

## ANNEX TO THE EUROPEAN SEARCH REPORT
## ON EUROPEAN PATENT APPLICATION NO.

EP 08 15 3946

This annex lists the patent family members relating to the patent documents cited in  the above-mentioned European search report.
The members are as contained in the European Patent Office EDP file on
The European Patent Office is in no way liable for these particulars which are merely given for the purpose of information.

24-07-2008

| Patent document cited in search report | | Publication date | Patent family member(s) | | Publication date |
|---|---|---|---|---|---|
| US 3854586 | A | 17-12-1974 | CA | 998645 A1 | 19-10-1976 |
| | | | CH | 577677 A5 | 15-07-1976 |
| | | | DE | 2415752 A1 | 05-12-1974 |
| | | | GB | 1460527 A | 06-01-1977 |
| | | | JP | 1153400 C | 30-06-1983 |
| | | | JP | 50018700 A | 27-02-1975 |
| | | | JP | 57043233 B | 13-09-1982 |
| US 4699273 | A | 13-10-1987 | BR | 8406270 A | 01-10-1985 |
| | | | DE | 3473572 D1 | 29-09-1988 |
| | | | EP | 0146299 A1 | 26-06-1985 |
| | | | GB | 2151018 A | 10-07-1985 |
| US 5353937 | A | 11-10-1994 | DE | 4406228 A1 | 24-11-1994 |
| | | | GB | 2278191 A | 23-11-1994 |
| US 6646218 | B1 | 11-11-2003 | NONE | | |
| US 5835206 | A | 10-11-1998 | NONE | | |
| JP 2003275690 | A | 30-09-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10056966 A, KAWASAKI KIKO KK
- JP 2001327249 A

**Non-patent literature cited in the description**

- **R.C.Gonzalez ; R.E.Woods.** Digital Image Processing. Addison-Wesley Publishing Co, 1992, 221-249
- **R.C.Gonzalez ; R.E.Woods.** Digital Image Processing. Addison-Wesley Publishing Co, 1992, 221-233